# EUROPEAN PATENT APPLICATION

(11) **EP 2 610 658 A2**
(43) Date of publication of application: **03.07.2013**
(21) Application number: 12195983.7
(22) Date of filing: 07.12.2012
(51) Int. Cl.: G02B 6/42

(54) **Bidirectional optical module**

(30) Priority: 27.12.2011 KR 20110143249
(71) Applicant: Hantech Co., Ltd, Gyeonggi-Do 445-813 (KR)
(72) Inventor: Choi, Jae-Shik, Gyeonggi-Do 445-813 (KR); Kim, Do-Hoon, Gyeonggi-Do 445-813 (KR); Kim, Jung-Taek, Gyeonggi-Do 445-813 (KR); Joo, Gwan-Chong, Gyeonggi-Do 445-813 (KR); Kim, Hyo-Gyeom, Gyeonggi-Do 445-813 (KR)
(74) Representative: Grünecker, Kinkeldey, Stockmair & Schwanhäusser

(57) **Abstract**

Provided is a bidirectional optical module having an improved structure capable of bidirectionally transmitting an optical signal. The bidirectional optical module includes a first optical transmission member formed lengthwise in one direction and configured to transmit an optical signal, a second optical transmission member formed lengthwise in one direction, configured to transmit an optical signal, and optically coupled to the first optical transmission member, a wavelength filter disposed between the first optical transmission member and the second optical transmission member, and configured to allow penetration of a first optical signal entering from the second optical transmission member and having a first wavelength band and reflection of a second optical signal entering the second optical transmission member and having a second wavelength band, a photoelectric conversion device optically coupled to the first optical transmission member and configured to receive the first optical signal, and an electrophotic conversion device optically coupled to the second optical transmission member and configured to transmit the second optical signal such that the second optical signal passes through the second optical transmission member to be reflected by the wavelength filter.

## Description

### CROSS-REFERENCE TO RELATED APPLICATION

This application claims priority to and the benefit of Korean Patent Application No. 2011-0143249, filed on December 27, 2011, the disclosure of which is incorporated herein by reference in its entirety.

### BACKGROUND

### 1. Field of the Invention

The present invention relates to an optical communication technique, and more particularly, to a bidirectional optical module.

### 2. Discussion of Related Art

In past decades, advantages of optical lines in a communication field and an optical module manufacturing technique using the same have been remarkably developed. In the related art, a unidirectional optical module using optical lines in transmission and reception is mainly used, and an example of a patent application related thereto is Korean Patent Laid-open Publication No. 2003-0071425.

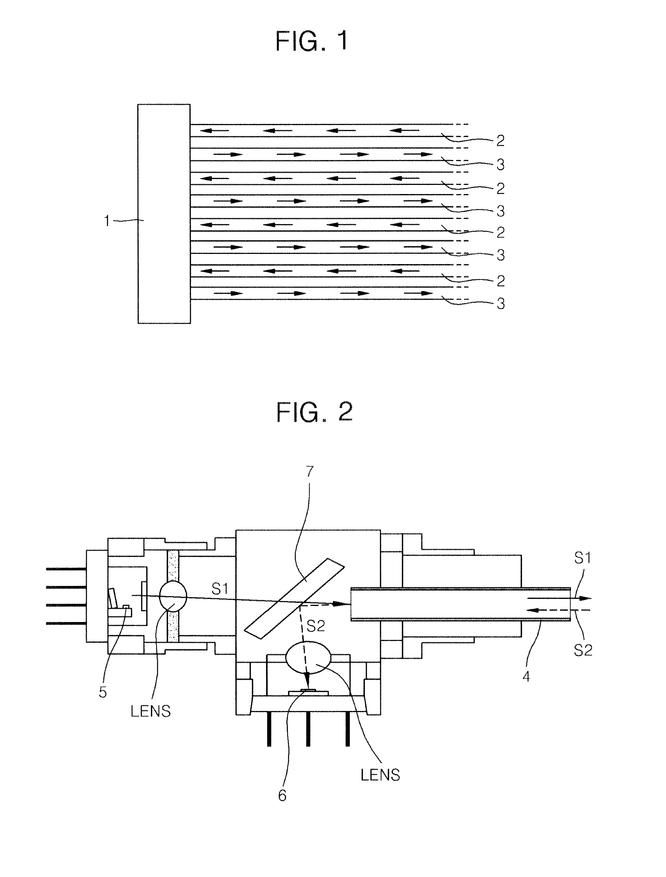

FIG. 1 is a view for explaining a conventional unidirectional optical module. Referring to FIG. 1, in the related art, optical coupling is performed in a unidirectional type. That is, in a state in which a sensor array (a photo diode, a VCSEL chip, and so on) 1 is coupled to an optical fiber array, only an optical signal transmitted to the sensor array (particularly, the photo diode) 1 from the outside is transmitted through some optical fibers 2, and only an optical signal transmitted from the sensor array (the VCSEL chip) is transmitted through the other optical fibers 3.

In addition, since the optical coupling is configured in the above-mentioned unidirectional type, for example, in order to operate four channels, a total of eight optical fibers should be optically coupled to the sensor array. Accordingly, a size of the optical coupling module is increased, and electrical efficiency is decreased.

In order to solve these problems of the unidirectional optical module, in recent times, interest in a bidirectional optical module capable of economically using optical lines that are already installed has been increasing, and aside from introduction of a new technique, development of the optical module is needed to obtain an economic effect.

FIG. 2 is a view for explaining a conventional bidirectional optical module.

Referring to FIG. 2, in the related art, a wavelength filter 7 is disposed at 45 degrees between an optical fiber 4 and a laser diode 5 such that a signal S1 having a first wavelength output from a laser diode 5 passes through the filter 7 to be optically coupled to an optical fiber 4, and a second wavelength signal S2 received through the optical fiber 4 is reflected at 90 degrees to enter a photo diode 6. However, in this structure, a size of the optical module is increased, and in order to minimize an optical coupling loss among the laser diode 5 - the optical fiber 4 - the photo diode 6, when the wavelength filter 7 installed in the middle thereof, an active alignment process using expensive optical alignment equipment and a process using laser welding equipment are needed, increasing manufacturing costs.

### SUMMARY OF THE INVENTION

In order to solve the problems, the present invention is directed to a bidirectional optical module having an improved structure capable of bidirectionally transmitting a signal, reducing a size of the optical module, and reducing manufacturing costs.

According to an aspect of the present invention, there is provided a bidirectional optical module including a first optical transmission member formed lengthwise in one direction and configured to transmit an optical signal; a second optical transmission member formed lengthwise in one direction, configured to transmit an optical signal, and optically coupled to the first optical transmission member; a wavelength filter unit disposed between the first optical transmission member and the second optical transmission member, and configured to allow penetration of a first optical signal entering from the second optical transmission member and having a first wavelength band and reflection of a second optical signal entering from the second optical transmission member and having a second wavelength band; a photoelectric conversion device optically coupled to the first optical transmission member and configured to receive the first optical signal; an electrophotic conversion device optically coupled to the second optical transmission member and configured to transmit the second optical signal; and a control unit electrically connected to the photoelectric conversion device and the electrophotic conversion device, and configured to analyze an electrical signal converted by the photoelectric conversion device and apply the electrical signal to the electrophotic conversion device such that the second optical signal is transmitted from the electrophotic conversion device, wherein the first optical signal transmitted through the second optical transmission member passes through the wavelength filter unit to be transmitted along the first optical transmission member to be received by the photoelectric conversion device, and the second optical signal transmitted from the electrophotic conversion device is reflected by the wavelength filter unit and then transmitted along the second optical transmission member.

According to the present invention, the wavelength filter unit may be coated on any one end of an end of the first optical transmission member and an end of the second optical transmission member, which oppose and are optically coupled to each other, and integrally formed therewith.

In addition, according to the present invention, a reflective film configured to reflect the first optical signal may be integrally formed with the first optical transmission member, and the first optical signal may be reflected by the reflective film and then received by the photoelectric conversion device.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a view for explaining a conventional unidirectional optical module;
FIG. 2 is a view for explaining a conventional bidirectional optical module;
FIG. 3 is a schematic view of a bidirectional optical module according to an embodiment of the present invention; and
FIG. 4 is a schematic view for explaining a process of transmitting an optical signal.

### DETAILED DESCRIPTION OF EXEMPLARY EMBODIMENTS

Hereinafter, an optical coupling module according to an exemplary embodiment of the present invention will be described in detail with reference to the accompanying drawings.

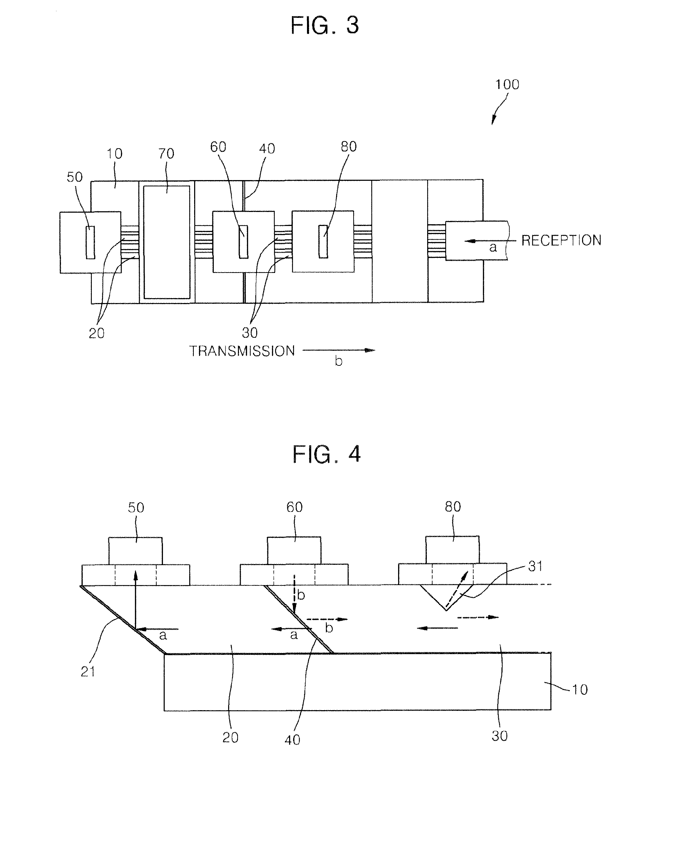

FIG. 3 is a schematic view of a bidirectional optical module according to an embodiment of the present invention, and FIG. 4 is a schematic view for explaining a process of transmitting an optical signal.

Referring to FIGS. 3 and 4, a bidirectional optical module 100 according to the embodiment includes an alignment substrate 10, a first optical transmission member 20, a second optical transmission member 30, a wavelength filter unit 40, a photoelectric conversion device 50, an electrophotic conversion device 60, and a control unit 70.

The alignment substrate 10 provides a place at which the first optical transmission member 20, the second optical transmission member 30, the photoelectric conversion device 50 and the electrophotic conversion device 60 are coupled to each other, which will be described. The alignment substrate 10 is designed to easily perform manual alignment of the above-mentioned configuration, and for example, an insertion groove (not shown) in which the first optical transmission member and the second optical transmission member are disposed and a protrusion threshold for alignment are provided in the alignment substrate. In addition, the alignment substrate is manufactured precisely through a semiconductor etching process, or the like.

The first optical transmission member 20 configured to transmit an optical signal is formed lengthwise in a one-way optical signal transmission direction. An optical fiber may be used as the first optical transmission member 20. In the embodiment, four first optical transmission members 20 form an array on the alignment substrate 10 and are coupled to one another. Both ends, i.e., a left end and a right end, of each of the first optical transmission members 20 are inclined in the longitudinal direction, i.e., with respect to the optical signal transmission direction, in the embodiment, 45°.

In addition, a reflective film (a reflective mirror) 21 is formed at the left end of the first optical transmission member 20. The reflective film 21 may be formed through a deposition process or the like, and functions to reflect the optical signal transmitted through the first optical transmission member 20. Here, while the reflective film may be configured to selectively reflect only a first optical signal a to be described later, the reflective film may be configured to reflective the optical signal of the entire wavelength region.

The second optical transmission member 30 configured to transmit the optical signal is formed lengthwise in the one-way optical signal transmission direction. An optical fiber may be used as the second optical transmission member 30. In the embodiment, four second optical transmission members 30 form an array on the alignment substrate 10 and are coupled to each other. The second optical transmission members 30 are optically coupled to the first optical transmission members 20. A left end of the second optical transmission member 30 is inclined in the longitudinal direction, i.e., with respect to the optical signal transmission direction, in the embodiment, 45°, to be disposed to face the right end of the first optical transmission member 20.

The wavelength filter unit 40 is configured to selectively allow penetration or reflection according to a wavelength band of the optical signal. The wavelength filter unit 40 is disposed between the right end of the first optical transmission member 20 and the left end of the second optical transmission member 30 to optically couple the first optical transmission member 20 and the second optical transmission member 30. As shown in FIG. 4, the wavelength filter unit 40 allows penetration of the first optical signal a entering from the second optical transmission member and having a first wavelength band, and allows reflection of a second optical signal b entering from the second optical transmission member and having a second wavelength band.

Meanwhile, the wavelength filter unit 40 may be coated on any one end of the right end of the first optical transmission member 20 and the left end of the second optical transmission member 30, which oppose and are optically coupled to each other, to be integrally formed therewith. In the embodiment, the wavelength filter unit 40 is coated on the right end of the first optical transmission member 20 to be integrally formed with the first optical transmission member 20. However, the wavelength filter unit 40 may be integrally formed with the left end of the second optical transmission member, and a type in which the wavelength filter unit is integrally formed with the end of the first optical transmission member may be varied in various aspects such as a deposition process and so on, not limited to the coating type.

The photoelectric conversion device 50 is configured to electrically convert the optical signal, and for example, a photo diode or the like is used. In the embodiment, four photoelectric conversion devices 50 form an array at one side (an upper side) of the first optical transmission member 20, and the photoelectric conversion devices are optically coupled to the first optical transmission members 20. In addition, the photoelectric conversion device 50 receives the first optical signal a reflected by the reflective film 21 of the first optical transmission member and converts the first optical signal a into an electrical signal.

The electrophotic conversion device 60 converts the electrical signal into an optical signal, and uses a vertical cavity surface emitting laser (VCSEL) device. In the embodiment, four electrophotic conversion devices 60 are provided to form an array on a boundary surface between the first optical transmission member and the second optical transmission member, i.e., on the wavelength filter unit 40, and are optically coupled to the second optical transmission members 30. As shown in FIG. 4, the electrophotic conversion device 60 transmits the second optical signal b, and the second optical signal b is transmitted to the wavelength filter unit 40 via the second optical transmission member and reflected by the wavelength filter to move along the second optical transmission member 30.

The control unit 70 is electrically connected to the photoelectric conversion device 50 and the electrophotic conversion device 60. The control unit analyzes the electrical signal converted by the photoelectric conversion device 50. Then, in order to transmit the second optical signal from the electrophotic conversion device 60, the electrical signal is applied to the electrophotic conversion device. In particular, in the embodiment, the optical signal is transmitted through the four optical transmission paths, i.e., paths formed by the first optical transmission member 20 and the second optical transmission member 30, and the control unit is configured to have four channels.

Meanwhile, as shown in FIG. 4, a tapping region 31 is formed at the second optical transmission member and an auxiliary photoelectric conversion device 80 is optically coupled to an upper side of the tapping region, so that the second optical signal b transmitted along the second optical transmission member 30 can be monitored after transmission from the electrophotic conversion device 60. That is, a portion of the second optical signal is extracted through the tapping region and received and analyzed by the auxiliary photoelectric conversion device, monitoring the second optical signal. Since such a tapping method is already known, description of the tapping method will be omitted.

In the optical coupling module having the above-mentioned configuration, the first optical signal a transmitted from the outside, i.e., the opposite optical coupling module, is transmitted through the second optical transmission member 30 and the first optical transmission member 20, reflected by the reflective film 21, and then received by the photoelectric conversion device 50. Then, the second optical signal b transmitted from the electrophotic conversion device 60 is reflected by the wavelength filter unit 40 and then transmitted to an external instrument along the second optical transmission member 30. That is, the optical signal can be received and transmitted through one optical transmission path, and thus the number of optical transmission paths, for example, optical fibers, can be reduced to a half in comparison with the conventional art. As a result, the size of the optical coupling module can be reduced and economic feasibility can be improved.

Moreover, an end of the first optical transmission member is inclined at 45°, the reflective film 21 is formed at the end, and the photoelectric conversion device 50 is disposed over the first optical transmission member 20. Then, the wavelength filter unit 40 is also inclined at 45°, and the electrophotic conversion device 60 is disposed over the wavelength filter unit 40. Next, the photoelectric conversion device 50 and the electrophotic conversion device 60 are disposed with respect to the optical transmission path in the same direction, i.e., over the optical transmission path, simplifying a structure of the bidirectional optical module.

More specifically, in order to align the photoelectric conversion device array and the electrophotic conversion device array, a space for installing the arrays should be formed on the alignment substrate 10. When both of the photoelectric conversion device array and the electrophotic conversion device array are disposed over the optical transmission path, the alignment substrate can be easily designed and assembled.

According to the present invention, since the optical signal can be bidirectionally transmitted through one optical path, the size of the bidirectional optical module can be reduced and manufacturing costs can be reduced.

While the present invention is shown and described in connection with exemplary embodiments thereof, it will be apparent to those skilled in the art that various modifications can be made without departing from the spirit and scope of the invention.

## Claims

1. A bidirectional optical module comprising:
a first optical transmission member formed lengthwise in one direction and configured to transmit an optical signal;
a second optical transmission member formed lengthwise in one direction, configured to transmit an optical signal, and optically coupled to the first optical transmission member;
a wavelength filter unit disposed between the first optical transmission member and the second optical transmission member, and configured to allow penetration of a first optical signal entering from the second optical transmission member and having a first wavelength band and reflection of a second optical signal entering from the second optical transmission member and having a second wavelength band;
a photoelectric conversion device optically coupled to the first optical transmission member and configured to receive the first optical signal;
an electrophotic conversion device optically coupled to the second optical transmission member and configured to transmit the second optical signal; and
a control unit electrically connected to the photoelectric conversion device and the electrophotic conversion device, and configured to analyze an electrical signal converted by the photoelectric conversion device and apply the electrical signal to the electrophotic conversion device such that the second optical signal is transmitted from the electrophotic conversion device,
wherein the first optical signal transmitted through the second optical transmission member passes through the wavelength filter unit to be transmitted along the first optical transmission member to be received by the photoelectric conversion device, and the second optical signal transmitted from the electrophotic conversion device is reflected by the wavelength filter unit and then transmitted along the second optical transmission member.

2. The bidirectional optical module according to claim 1, wherein the wavelength filter unit is coated on any one end of an end of the first optical transmission member and an end of the second optical transmission member, which oppose and are optically coupled to each other, and integrally formed therewith.

3. The bidirectional optical module according to claim 1, wherein a reflective film configured to reflect the first optical signal is integrally formed with the first optical transmission member, and
the first optical signal is reflected by the reflective film and then received by the photoelectric conversion device.
